# FASCICULE DE BREVET EUROPEEN

(11) **EP 0 762 013 B1**
(45) Date de publication et mention de la délivrance du brevet: **05.12.2001**
(21) Numéro de dépôt: 96401729.7
(22) Date de dépôt: 05.08.1996
(51) Int. Cl.: F16F 9/348, F16F 1/32

(54) **Piston à clapet flottant pour tube d'amortisseur hydraulique, notamment de type monotube**
Frei bewegliches Kolbenventil für hydraulischen Dämpferzylinder, insbesondere eines Einzelrohrdämpfers
Floating valve piston for hydraulic damper tube, especially of the monotube type

(30) Priorité: 31.08.1995 FR 9510267
(43) Date de publication de la demande: 12.03.1997
(73) Titulaire: SOCIETE FRANCAISE DES AMORTISSEURS DE CARBON, F-27430 Saint Pierre du Vauvray (FR)
(72) Inventeur: Bourcier de Carbon, Roland, 92200 Neuilly-sur-Seine (FR); Charleux, Eric, 71400 Autun (FR)
(74) Mandataire: Casalonga, Axel

(56) Documents cités:
- WO-A-85/00209
- DE-C- 958 532
- FR-A- 2 320 466
- FR-A- 2 693 524
- GB-A- 311 754
- US-A- 4 610 332
- PATENT ABSTRACTS OF JAPAN vol. 007, no. 189 (M-237), 18 Août 1983 & JP-A-58 091945 (NISSAN JIDOSHA KK), 1 Juin 1983,
- REVUE TECHNIQUE AUTOMOBILE, vol. 47, no. 538, Avril 1992, FR, pages xxx-xxxii, XP002001103 "UNE REUSSITE BASEE SUR L'INVENTION"
- PATENT ABSTRACTS OF JAPAN vol. 001, no. 040 (M-016), 21 Avril 1977 & JP-A-51 149475 (TOKICO LTD), 22 Décembre 1976,
- PATENT ABSTRACTS OF JAPAN vol. 005, no. 022 (M-054), 10 Février 1981 & JP-A-55 149438 (YAMAHA MOTOR CO LTD), 20 Novembre 1980,

## Description

L'invention concerne les pistons d'amortisseurs hydrauliques, notamment ceux de type monotube pressurisé.

Un amortisseur hydraulique comporte un piston apte à coulisser à l'intérieur d'un tube pour séparer l'espace interne de celui-ci en deux chambres remplies de fluide. Un passage traversant est prévu au sein du piston pour mettre en communication les deux chambres, et coopère avec un système de clapet régulant l'ouverture du passage en fonction de l'écoulement du fluide qui dépend du fait que l'amortisseur se trouve dans une phase d'extension ou de compression.

On peut habituellement caractériser une suspension à partir d'une courbe donnant l'effort exercé sur l'amortisseur en fonction de la vitesse de débattement du piston à l'intérieur de celui-ci. Actuellement, les courbes classiques s'écartent, tant dans la phase d'extension que dans la phase de compression, de la droite théorique d'amortissement pour suivre une évolution sensiblement linéaire avec cependant un fléchissement rapide dans la phase de compression pour aboutir à une relative stabilisation de la force quelle que soit la valeur de la vitesse.

Or, pour certains types de véhicule notamment, il a été observé qu'un meilleur confort nécessiterait, à vitesse élevée en particulier, typiquement supérieure à 0,5 m/s, l'application d'efforts moindres que ceux occasionnés selon ces lois classiques d'amortissement.

L'invention vise à apporter une solution à ce problème, en particulier pour les amortisseurs dont le piston est équipé d'un clapet flottant, bien connu de l'homme du métier, dans lequel les mêmes voies de passage servent à l'écoulement du fluide dans les deux sens, alors que dans d'autres types d'amortisseurs hydrauliques, sont prévues des voies d'écoulement séparées pour la phase de compression et pour la phase d'extension.

Un tel piston à clapet flottant est connu de FR-A-2 693 524.

Telle que revendiquée, l'invention propose donc un piston à clapet pour tube amortisseur hydraulique, comprenant un corps de piston possédant un passage de fluide coopérant avec un clapet flottant pour contrôler dans les deux sens le débit de fluide à travers le passage. Selon l'invention, le clapet flottant comporte une rondelle conique dont la flèche à l'état libre est comprise entre 0,1 fois et 2 fois l'épaisseur de ladite rondelle.

En d'autres termes, alors que dans les pistons à clapet classiques, le clapet flottant comporte une rondelle plate, aux tolérances de fabrication près, l'invention prévoit au contraire de former ce clapet flottant à partir d'une rondelle conique ayant une flèche prédéterminée à l'état libre. Au sens de la présente invention, par "flèche à l'état libre" on entend la flèche de la rondelle lorsqu'elle n'est pas montée sur le piston.

L'utilisation d'une telle rondelle conique permet d'obtenir une loi d'amortissement présentant un ou deux points d'inflexion en phase de compression et/ou d'extension. En d'autres termes, une telle loi se situe en deçà des lois classiques d'amortissement et présente, notamment en phase d'extension une zone sensiblement plate. L'invention permet donc de réduire à vitesse élevée l'effort exercé sur l'amortisseur ce qui améliore le confort d'utilisation pour certains types de véhicules, tout en permettant de ne pas trop diminuer l'effort aux vitesses moyennes (typiquement entre 0,1 m/s et 0,5 m/s).

Il a été observé qu'une conicité inférieure à 0,1 fois l'épaisseur n'apportait pas de variation sensible de la loi d'amortissement, tandis qu'au-delà de deux fois l'épaisseur, il existait des risques d'inversion de la conicité de la rondelle conduisant alors à un disfonctionnement du clapet flottant.

Une flèche égale environ à l'épaisseur de cette rondelle a donné des résultats satisfaisants, et en particulier une bonne tenue en endurance.

La rondelle conique peut être également précontrainte c'est-à-dire que sa flèche lorsqu'elle est montée sur le piston, est inférieure à sa flèche à l'état libre. Cette précontrainte peut être obtenue en disposant au moins une plaque annulaire de calage, ayant une épaisseur choisie, entre le corps de piston et une plaque annulaire centrale supportant une plaque annulaire supérieure débordant légèrement de la plaque centrale et contre le bord libre de laquelle s'appuie ladite rondelle conique.

L'invention a également pour objet une rondelle conique pour clapet flottant d'amortisseur hydraulique, la flèche de la rondelle à l'état libre étant comprise entre 0,1 fois et 2 fois l'épaisseur de ladite rondelle.

D'autres avantages et caractéristiques de l'invention apparaîtront à l'examen de la description détaillée d'un mode de réalisation, nullement limitatif, et des dessins annexés sur lesquels :
- la figure 1 est une coupe longitudinale d'un tube d'amortisseur équipé d'un piston à clapet flottant selon l'art antérieur,
- la figure 2 est une vue plus détaillée du piston à clapet flotttant de la figure 1,
- la figure 3 est une vue en coupe d'un piston à clapet flottant selon l'invention, et
- la figure 4 illustre différentes lois d'amortissement.

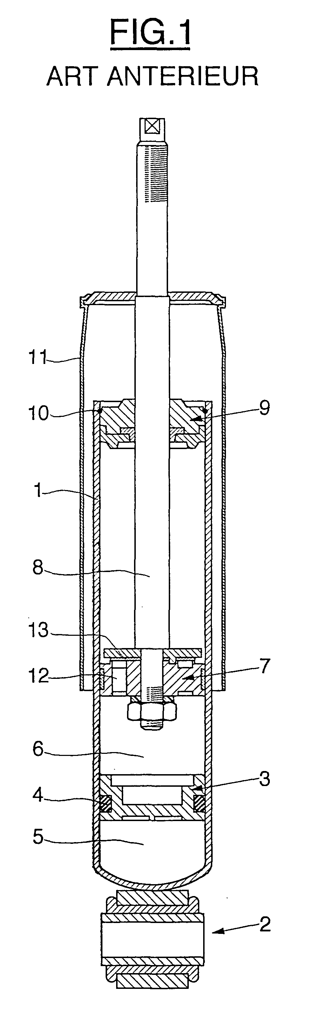

Tel qu'il est illustré sur la figure 1, l'amortisseur hydraulique télescopique monotube comprend un tube de cylindre 1 fixé à l'une de ses extrémité par un oeillet 2. Un piston séparateur gaz/liquide 3, monté libre à coulissement dans le cylindre 1 est muni d'un joint torique d'étanchéité 4 et sépare le cylindre en deux portions. Une portion 5 contient un gaz sous pression et l'autre portion 6 est remplie de fluide hydraulique. Un autre piston 7 est fixé à l'extrémité d'une tige 8 dont le déplacement dans le cylindre est guidé par le guide 9 fixé au cylindre par un moyen de fixation 10.

L'extrémité supérieure de la tige 8 est fixée à un goujon de fixation.

L'amortisseur est complété par un protecteur 11 solidaire de la tige 8 et venant coiffer une partie du cylindre 1.

Pour assurer le fonctionnement de l'amortisseur, le piston 7 comporte des passages permanents 12 pour le fluide hydraulique, coopérant avec un clapet dit flottant.

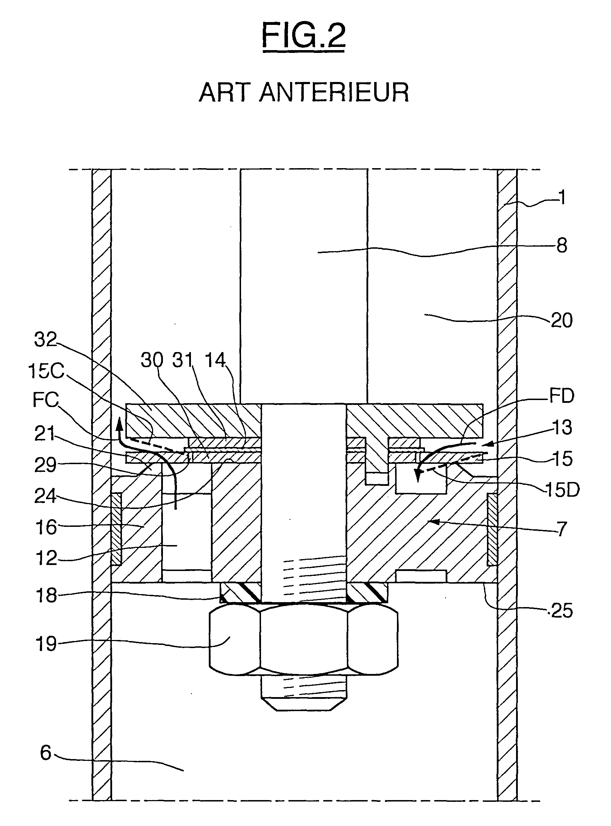

Tel qu'illustré sur la figure 2, le piston 7 comporte un corps de piston 16 de forme générale cylindrique, apte à coulisser à l'intérieur du tube 1, et comportant une pluralité d'alvéoles, par exemple au nombre de huit, débouchant de part et d'autre du corps de piston. Ces alvéoles définissent le passage permanent 12 pour le fluide hydraulique entre la chambre supérieure 20 et la chambre inférieure 6.

La partie gauche de cette figure est une section longitudinale dans le plan de symétrie d'une alvéole tandis que la partie droite est une section longitudinale effectuée entre deux alvéoles. Bien que chaque alvéole constitue une voie de passage bidirectionnelle pour le fluide, la partie gauche de la figure, illustre, en tiretés, la configuration du clapet flottant dans la phase de compression tandis que la partie droite illustre, en tiretés, la configuration dans la phase de détente ou d'extension.

Le système de clapet 13, dit flottant, est disposé sur la face supérieure 24 du corps de piston 16 et comporte, de façon classique, une plaque annulaire centrale 30 entourée d'une couronne 15 (clapet flottant proprement dit) reposant en appui, d'une part sur un épaulement 21 du corps de piston, et d'autre part, contre le bord libre d'une plaque supérieure 14 située sur la plaque centrale 30 et débordant légèrement de celle-ci. Sur la plaque supérieure 14 est disposée une autre plaque 31, cet empilement de plaques étant pris en sandwich entre la face supérieure 24 du piston et une plaque supérieure de fixation 32 comportant deux ergots fixés dans le corps de piston.

La couronne plane 15 définit avec la plaque centrale un espace 29. Cette couronne 15 est apte à fléchir selon la position 15C dans la phase de compression de l'amortisseur pour se décoller de l'épaulement 21 du piston et autoriser le passage du fluide selon la flèche FC. Dans la phase d'extension, la couronne 15 s'oriente selon la position 15D en se décollant de la plaque supérieure 14 pour autoriser le passage du fluide selon la flèche FD.

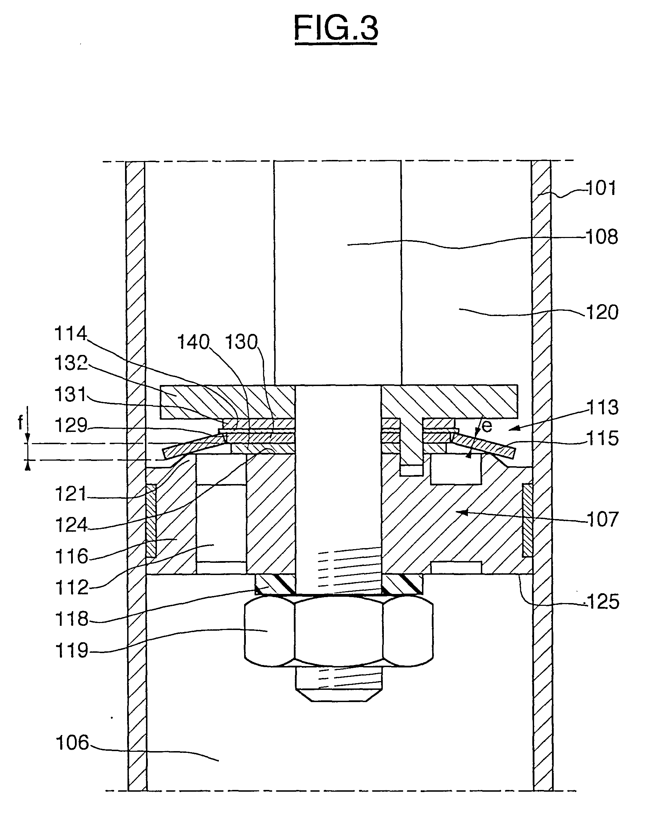

Alors que dans ce piston de l'art antérieur illustré sur la figure 2, la couronne 15 est plane, aux tolérances de fabrication près, l'invention, telle qu'illustrée sur la figure 3, prévoit au contraire l'utilisation d'un système de clapet flottant 113 comportant une rondelle conique 115 (clapet flottant proprement dit) dont la flèche à l'état libre est comprise entre environ 0,1 fois et environ 2 fois l'épaisseur de ladite rondelle 115.

Sur la figure 3, qui illustre un mode de réalisation du piston à clapet selon l'invention, les éléments analogues ou ayant des fonctions analogues à ceux illustrés sur la figure 2 ont des références augmentées de 100 par rapport à celles qu'ils avaient sur cette figure 2. Seules les différences entre ces deux figures seront maintenant décrites.

La rondelle conique 115 vient en appui d'une part sur l'épaulement 121 du corps de piston 116 et, d'autre part, contre le bord libre de la plaque annulaire supérieure 114 débordant légèrement de la plaque centrale 130. En phase de compression, comme pour le cas d'une rondelle plane, la rondelle 115 fléchit pour se décoller de l'épaulement 121 du piston et autoriser le passage du fluide. Dans la phase d'extension, la rondelle 115 se décolle de la plaque supérieure 114.

La flèche f de la rondelle conique 115 peut se mesurer par la distance axiale entre les bords inférieur et supérieur d'une même face de la rondelle. Si la flèche f de cette rondelle est inférieur à 0,1 fois son épaisseur e, pratiquement aucune amélioration de confort n'est observable. Si cette flèche f est supérieure à deux fois l'épaisseur e, il y a alors un risque d'une inversion de conicité de la rondelle conique 115. En d'autres termes, la rondelle 115 risque de se décoller définitivement du bord libre de la plaque supérieure 114 pour être orientée vers la face inférieure 125 du piston et laisser définitivement un espace libre pour le fluide ce qui occasionnerait un non fonctionnement du clapet.

Pour préserver une conicité de la rondelle 115 lorsque celle-ci est montée entre la plaque supérieure 114 et l'épaulement 21, il est prévu de disposer, entre la plaque centrale 130 et la face supérieure 124 du piston, au moins une plaque annulaire de calage 140 ayant une épaisseur choisie.

L'épaisseur de cette plaque de calage 140 permet, selon sa valeur, d'obtenir une flèche f à l'état "monté" égale à la flèche f à l'état "libre", ou bien d'obtenir une flèche à l'état "monté" inférieure à la flèche à l'état "libre", c'est-à-dire de précontraindre la rondelle 115.

A la limite, il serait également possible de supprimer la plaque 140 pour rendre la rondelle conique 115 sensiblement plane à l'état "monté".

Bien entendu, les mêmes effets pourraient être obtenus en remplaçant la plaque annulaire de calage par une plaque centrale 130 d'épaisseur plus ou moins grande, ou par une configuration spécifique de la face supérieure du piston.

La rondelle conique 115 peut être constituée de tout matériau à haute limite élastique tels que des alliages métalliques, des matériaux composites, ou céramiques. On peut par exemple utiliser de l'acier dont la limite élastique se situe entre 1000 et 1300 N/mm².

Les dimensions typiques de la rondelle élastique conique sont, pour l'épaisseur, de 0,1 à 5 mm, pour le diamètre intérieur de 10 à 50 mm et pour le diamètre extérieur de 15 à 70 mm. En ce qui concerne la flèche, une valeur de une fois l'épaisseur permet en outre une bonne tenue en endurance du clapet.

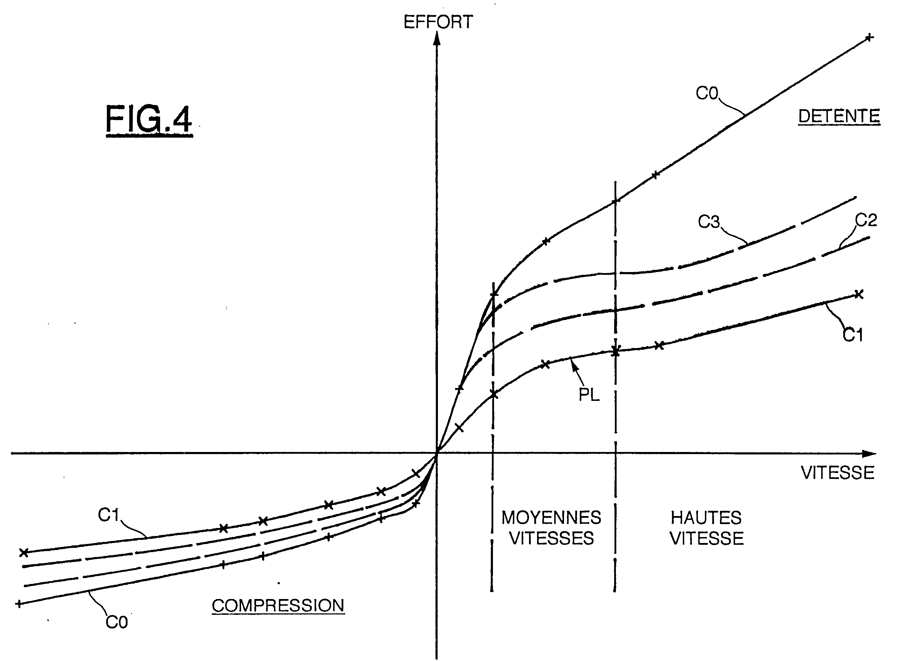

Sur la figure 4 la courbe CO illustre une loi d'amortissement obtenue par un clapet flottant du type celui illustré sur la figure 2 tandis que la courbe C1 illustre la loi d'amortissement obtenue par un clapet flottant conique tel que celui illustré sur la figure 3.

On remarque que la courbe C1 se situe en deçà de la courbe CO ce qui se traduit, à vitesse égale, par un effort moindre sur l'amortisseur. Par ailleur, à partir d'un certain seuil de vitesse, notamment en phase de détente, la courbe C1 présente une zone PL sensiblement plate dans laquelle une augmentation de la vitesse se traduit par une augmentation très minime de l'effort exercé sur l'amortisseur. Ce plateau PL, conduisant à l'obtention d'un point d'inflexion, permet de ne pas trop réduire l'effort à moyenne vitesse tout en garantissant une réduction de l'effort à haute vitesse.

La précontrainte de la rondelle conique permet d'ajuster la loi d'amortissement, notamment aux vitesses faibles, tout en conservant la zone de plateau, comme illustré par les courbes C2 et C3.

## Revendications

1. Piston à clapet pour tube d'amortisseur hydraulique, comprenant un corps de piston (116) possédant un passage de fluide (112) coopérant avec un clapet flottant (115) pour contrôler dans les deux sens le débit de fluide à travers le passage, **caractérisé par le fait que** le clapet flottant comporte une rondelle conique (115) dont la flèche (f) à l'état libre est comprise entre 0,1 fois et 2 fois l'épaisseur (e) de ladite rondelle.

2. Piston selon la revendication 1, **caractérisé par le fait que** la rondelle conique (115) est précontrainte.

3. Piston selon la revendication 1 ou 2, **caractérisé par le fait que** le corps (116) du piston supporte un empilement de plaques comportant une plaque annulaire centrale (130) supportant une plaque annulaire supérieure (114) débordant légèrement de la plaque centrale (130), **par le fait que** la rondelle conique (115) vient d'une part en appui sur le corps (116) du piston et d'autre part contre le bord libre de la plaque annulaire supérieure (114), et **par le fait qu'**en phase de compression de l'amortisseur, la rondelle (115) est apte à fléchir pour se décoller du corps du piston tandis qu'en phase de détente, la rondelle conique est apte à se décoller de la plaque supérieure (114).

4. Piston selon la revendication 3, **caractérisé par le fait qu'**il comprend au moins une plaque annulaire de calage (140), ayant une épaisseur choisie, disposée entre la plaque annulaire centrale (130) et le corps de piston (116).

5. Rondelle conique pour clapet flottant d'amortisseur hydraulique tel que défini dans l'une des revendication 1 à 4, **caractérisée par le fait que** la flèche (f) de la rondelle conique (115) à l'état libre est comprise ente 0,1 fois et 2 fois l'épaisseur(e) de ladite rondelle (115).

## Patentansprüche

1. Kolben mit Ventilklappe für ein Rohr bzw. einen Zylinder eines hydraulischen Stoßdämpfers mit einem Kolbenkörper (116), der einen mit einer Schwimm-Ventilklappe (115) zusammenwirkenden Fluiddurchgang (112) aufweist, um in beiden Richtungen den Durchsatz von Fluid durch den Durchgang zu steuern,
**dadurch gekennzeichnet, daß** die Schwimm-Ventilklappe eine tellerförmige Federscheibe (115) aufweist, deren federndes Nachgeben (f = flèche) in freiem Zustand zwischen dem 0,1-fachen und dem 2-fachen der Dicke (e) der Scheibe liegt.

2. Kolben gemäß Anspruch 1, **dadurch gekennzeichnet, daß** die Federscheibe (115) vorgespannt bzw. vorbelastet ist.

3. Kolben gemäß Anspruch 1, **dadurch gekennzeichnet, daß** der Körper (116) des Kolbens einen Plattenstapel mit einer ringförmigen zentralen Platte (130) trägt, die eine geringfügig über die zentrale Platte (130) vorstehende obere ringförmige Platte (114) trägt, daß sich die tellerförmige Federscheibe (115) einerseits am Körper (116) des Kolbens und andererseits am freien Rand der oberen ringförmigen Platte (114) abstützt, und daß sich die Scheibe (115) in der Kompressionsphase des Stoßdämpfers zu biegen vermag, um sich vom Körper des Kolbens zu lösen, während sich die Federscheibe in der Entspannungsphase von der oberen Platte (114) zu lösen vermag.

4. Kolben gemäß Anspruch 3, **dadurch gekennzeichnet, daß** er mindestens eine ringförmige Keil- bzw. Abstandsplatte (140) mit einer ausgewählten Dicke umfaßt, die zwischen der zentralen ringförmigen Platte (130) und dem Körper (116) des Kolbens angeordnet ist.

5. Tellerförmige Federscheibe für eine Schwimm-Ventilklappe eines hydraulischen Stoßdämpfers, wie er in einem der Ansprüche 1 bis 4 definiert ist, **dadurch gekennzeichnet, daß** das federnde Nachgeben (f) der Federscheibe (115) in freiem Zustand zwischen dem 0,1-fachen und dem 2-fachen der Dicke (e) der Federscheibe (115) liegt.

## Claims

1. Piston with valve for hydraulic shock-absorber tube, comprising a piston body (116) having a fluid passage (112) co-operating with a floating valve (115) to control the flow of fluid through the passage in both directions, **characterised by** the fact that the floating valve includes a conical washer (115) the height (f) of which in the free state is between 0.1 times and 2 times the thickness (e) of the said washer.

2. Piston as described in claim 1, **characterised by** the fact that the conical washer (115) is prestressed.

3. Piston as described in claim 1 or 2, **characterised by** the fact that the body (116) of the piston supports a stack of plates including a central annular plate (130) supporting an upper annular plate (114) slightly overlapping the central plate (130), by the fact that the conical washer (115) bears on the one hand on the body (116) of the piston and on the other against the free edge of the upper annular plate (114), and by the fact that in the compression phase of the shock-absorber, the washer (115) is able to flex to detach from the body of the piston while in the expansion phase the conical washer is able to detach from the upper plate (114).

4. Piston as described in claim 3, **characterised by** the fact that it comprises at least one annular shim plate (140), having a selected thickness, arranged between the central annular plate (130) and the piston body (116).

5. Conical washer for hydraulic shock-absorber floating valve, as defined in one of claims 1 to 4, **characterised by** the fact that the height (f) of the conical washer (115) in the free state is between 0.1 times and 2 times the thickness (e) of the said washer (115).
